# EUROPEAN PATENT SPECIFICATION

(11) **EP 1 872 007 B1**
(45) Date of publication and mention of the grant of the patent: **09.07.2008**
(21) Application number: 05743459.9
(22) Date of filing: 19.04.2005
(51) Int. Cl.: F02M 21/02

(54) **A GASEOUS FUEL INJECTOR FOR INTERNAL COMBUSTION ENGINES**
VORRICHTUNG ZUM EINSPRITZEN VON GASFÖRMIGEM KRAFTSTOFF FÜR BRENNKRAFTMOTOREN
INJECTEUR DE CARBURANT GAZEUX POUR MOTEURS A COMBUSTION INTERNE

(43) Date of publication of application: 02.01.2008
(73) Proprietor: O.M.V.L. S.p.A., 35020 Pernumia PD (IT)
(72) Inventor: PLAIAN, Andrei, 35020 Ponte San Nicolo' (PD) (IT)
(74) Representative: Fabris, Stefano
(86) International application number: PCT/IT2005/000229
(87) International publication number: WO 2006/111987

(56) References cited:
- EP-A- 0 964 146
- FR-A- 2 843 173
- FR-A- 2 843 174

## Description

### Technical field

The present invention relates to a gaseous fuel injector for internal combustion engines having the characteristics stated in the preamble to the main claim.

### Technological background

Fuel injectors known in the relevant technical field are on-off valves operated by electromagnetic actuators. The functional role of the fuel injectors is to meter as accurately as possible the quantity of fuel burnt in a cylinder in every engine cycle. Since the cross-section for passage of the fuel opened by the electromagnet is subject to manufacturing tolerances and is also variable according to the degree of wear and the temperature, the solution normally used to obtain the necessary metering accuracy is to connect in series with the injector (generally downstream) a calibrated nozzle which limits the flow to a constant fixed value, and to adjust the opening time of the injector to obtain the required injected quantity. The cross-section for passage of the fuel opened by the electromagnet is generally chosen as equal to a value approximately double that of the required cross-section of the calibrated nozzle. In this way, any variations in the travel of the electromagnet occurring during operation of the injector do not affect metering accuracy.

An injector having the above-mentioned characteristics is known from French patent application 2843174. The injector which it describes has a body into which the fuel is admitted through an inlet duct and is discharged by means of an outlet duct.

The movable armature of an electromagnet is attached to a diaphragm which separates the body into two chambers, keeps the armature centred and forms a shutter which can shut in a controlled manner a seating in the form of a circular hole, which coincides with one end of the outlet duct. The volumes of the chambers formed in the body on one side and the other of the diaphragm are connected by means of the inlet duct, which is divided into two by the edge of the diaphragm. The electromagnet which controls the opening of the injector is provided with a cylindrical coil, coaxial with the outlet duct.

The main disadvantage of this type of injector is that, to open the cross-section of the seating (in the form of a circular hole) completely, a large shutter travel is required, equal to a quarter of the diameter of the seating, with the result that the time taken by the shutter to travel this distance is fairly long. At the same time, the electromagnet must have a large air gap and consequently a high inductance to generate the necessary force, which slows the injector down still further. For this solution, a reduction in travel (and in the air gap) for a given fuel passage cross-section can be obtained only by increasing the diameter of the seating proportionately. On the other hand, however, this involves an increase in the pressure forces acting on the shutter (being of a larger size), a circumstance which makes it essential to use larger and consequently more costly and slower-moving electromagnets. Moreover, in these devices, in order not to increase the force required of the electromagnet any further, no return spring capable of applying a closing force to the shutter is used. The result is that when there is no pressure feed to the injector, the shutter is not pressed onto its seating, with the problem that there may be deposits of dirt or other extraneous substances present in the fuel (in particular in LPG) on the sealing surface, consequently impairing its sealing characteristics.

Another limit which may be encountered in this known solution is that the area for passage of the fuel which places in communication the two chambers formed on opposite sides of the diaphragm is positioned laterally relative to the shutter, consequently creating asymmetrical pressure distribution on the diaphragm, which can be seen particularly when there are movements of very short duration, for example of the order of one millisecond. This asymmetrical distribution of pressures causes more rapid movement of the diaphragm in the area close to the fuel passage between the two above-mentioned chambers, with, conversely, delayed movement on the part diametrically opposite. The result is that the shutter reaches the end of its travel slightly inclined, causing a longer stop time. Since moreover the curve representing the mass injected as a function of opening time becomes linear for times which are longer compared with that required to stop the shutter at the end of its travel, the phenomenon described above reduces the accuracy of metering of the quantity of fuel for extremely short opening times.

Another limit which may be noted in this injector consists in the fact that the moving armature is in the form of a disc of constant thickness, and therefore the cross-section for the passage of the magnetic field flux in a radial direction needlessly increases towards the periphery, and instead causes an unwanted increase in mass, which slows down the movement of the injector. The relation between the mass of the armature and the electromagnetic force could be optimized using a moving armature with variable thickness in a radial direction, though this involves a significant increase in production costs, generally not readily acceptable.

Another injector solution is known from British patent application 2334552 which describes a shutter associated with a seating placed between the inlet and outlet ducts, which is operated by means of a moving armature of an electromagnet, with provision of a closing spring applying a loading to move the shutter into the position for shutting off the passage of fuel through the seating. The injector has a seating with a flat sealing surface with which is associated a corresponding flat surface of the shutter facing it. Provision is made in this injector, to increase the delivery of fuel injected, for the seating to have a cross-section of single or multiple annular form, with flat sealing surfaces, and for the shutter to be formed by corresponding rings, with the same number of flat sealing surfaces, connected to each other by radial walls. The armature of the electromagnet is produced as a distinct and separate part and actuates the shutter by means of a mechanical connecting element. This design solution is particularly complex, in particular because of the number of components provided in the moving part of the injector, which also add to the overall mass. The travel of the electromagnet is the result of a large number of dimensions of the component parts and cannot therefore be obtained with acceptable accuracy, even when there are fairly tight tolerances on the above-mentioned component parts. Accordingly, provision is made in this solution for a system to calibrate the travel of the electromagnet which further complicates the design solution.

Moreover, the moving part of the injector, being rather weighty, causes an increase in the response time of the injector.

Another limit is due to the fact that the sealing between the flat surfaces is particularly sensitive to the presence of impurities. These impurities may be present between the flat surfaces of the shutter and of the seating which consequently cannot move closer together and come into contact to ensure sealing. Consequently, the small continuous leaks which may occur at times eventually cause metering inaccuracies.

Moreover, for a given pressure force on the shutter, the presence of connecting radial walls between the rings of the shutter involves a reduction in the cross-section for passage of the fuel and, consequently, a reduction in the maximum delivery obtainable with the available force of the electromagnet.

### Description of the invention

The technical problem addressed by the present invention is to produce a gaseous fuel injector for internal combustion engines, structurally and functionally designed to overcome the unwelcome limits and disadvantages noted with reference to the known technology cited.

This problem is solved by the invention by means of an injector produced according to the claims which follow.

### Brief description of the drawings

The characteristics and advantages of the invention will become clear from the following detailed description of some preferred examples of embodiment of the invention illustrated, purely by way of non-limiting example, with reference to the appended drawings in which:
figure 1 is a view in axial cross-section of a first example of an injector according to the invention,
figure 1A is a view in partial cross-section and at an enlarged scale of the detail indicated by the arrow A in figure 1,
figure 2 is a view in axial cross-section of a part of the device in figure 1 in a variant embodiment,
figure 3 is a view in axial cross-section of the part in figure 2 in a further variant embodiment,
figures 4 and 5 are partial plan views, respectively from above and below, of the part in figure 3,
figure 6 is a view in cross-section and at an enlarged scale of a detail in figure 3,
figure 7 is a view in axial cross-section of a second example of an injector according to the invention, as part of a group of injectors,
figure 8 is a view in axial cross-section of a part in figure 7,
figure 9 is a plan view from above of the part in figure 8,
figures 10 and 11 are partial plan views from above of the part in figure 8 in respective further variant embodiments,
figures 12 and 13 are views in partial cross-section, respectively in front elevation and in plan from above of a part of the device in the preceding drawings,
figure 14 is a plan view from above of a part in figure 1.

### Preferred modes of embodiment of the invention

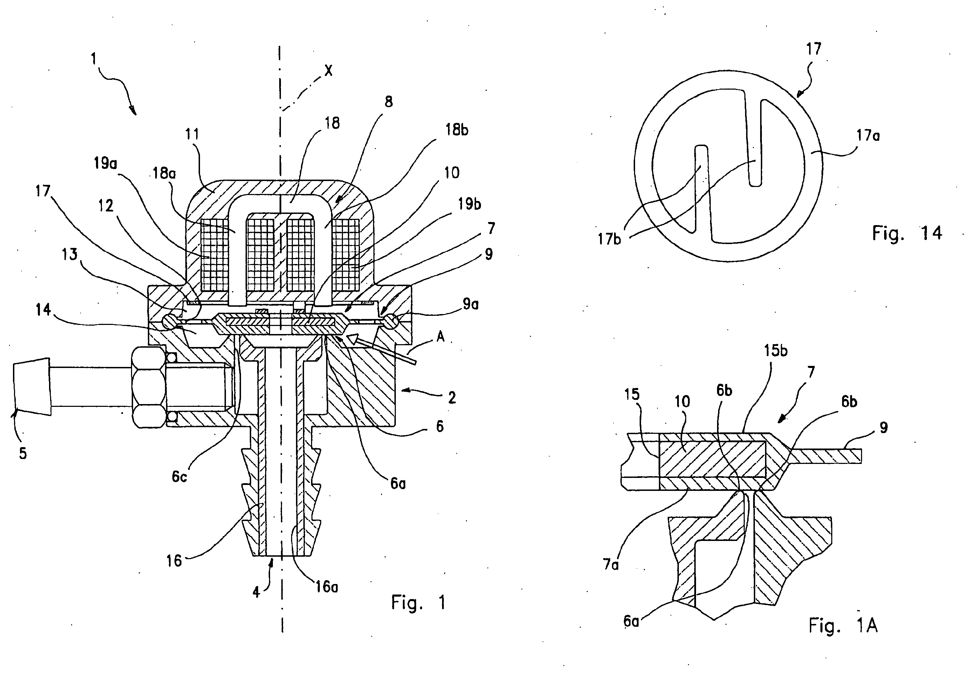

With reference initially to figure 1, the number 1 indicates as a whole a gaseous fuel injector designed for use in internal combustion engines, produced according to the present invention.

The injector 1 comprises a body 2 with an inlet aperture 4 and an outlet aperture 5.

The body also comprises a valve seating 6 associated with a respective shutter element 7 which can be moved in a controlled manner by an electromagnet 8 from and to a position of contact with the seating 6, to open or close the flow of fuel delivered through it.

The shutter element 7 comprises a diaphragm 9 capable of supporting in a centred position a moving armature 10 of the electromagnet. The letter X indicates the main axis of the shutter, coaxially with which are arranged both the seating 6 and the electromagnet 8 as can be clearly seen in figure 1.

The diaphragm 9 is held along an edge 9a on its perimeter between the body 2 and a cover 11 which can be secured to each other, the cover constituting a housing for the electromagnet 8. The edge 9a also functions as a sealing gasket element in joining the cover 11 to the body 2.

The diaphragm 9 is made integral at the centre with the moving armature 10. In the area comprised between the perimeter edge 9a and the centre portion where it is connected to the moving armature 10, the diaphragm 9 has a plurality of through holes 12, which place in communication with each other respective chambers 13, 14 bounded by the diaphragm 9 in the space formed between the body 2 and the cover 11. The number 15 indicates an aperture passing centrally through the diaphragm 9 and the moving armature 10, and this is also arranged to place the chambers 13 and 14 in communication with each other. Advantageously, the aperture 15 is made as a through hole extending coaxially with the axis X.

The seating 6 has a fuel passage cross-section in the form of a slot elongated in a first direction of development predominant relative to a second direction of transverse development. In the example described here, the cross-section is in the form of an annular slot 6a in which the first direction is extended circumferentially and is predominant relative to the second direction of transverse development running radially. This annular slot 6a also has sealing edges 6b, facing the shutter 7, having vertices with a cross-section of substantially rounded shape, capable of sealing contact against a flat surface 7a of the shutter cooperating with the seating. This form of the sealing edges 6b ensures a better sealing effect in contact with the surface 7a of the shutter, even where there are impurities present on the seating.

The seating 6 is lengthened, in the direction of the outlet aperture 5, into an annular channel 6c, the side walls of which facing each other belong respectively to the valve body 2 and to a tubular element 16 fitted in the valve body coaxially with the axis X. The tubular element 16 has at the end axially opposite the seating 6, of which it forms the inner sealing edges 6b, an end portion which may be made integral with the body 2, extending as far as a free end in which the fuel inlet aperture 4 is formed, the central cavity 16a of the tubular element 16 thus forming the duct admitting the fuel into the injector.

The number 17 indicates a spring having an attachment base 17a of annular shape from which there extend a pair of elastically deformable appendages 17b arranged to constitute spring return means (figure 14).

The spring 17, preferably obtained from stamped sheet, is secured to the cover 11 by its attachment base 17a in a position such that the spring return appendages 17b act on the shutter 7, without interfering with the area of magnetic attraction of the moving armature 10 of the electromagnet, to apply a loading moving it towards the closing position of the seating 6.

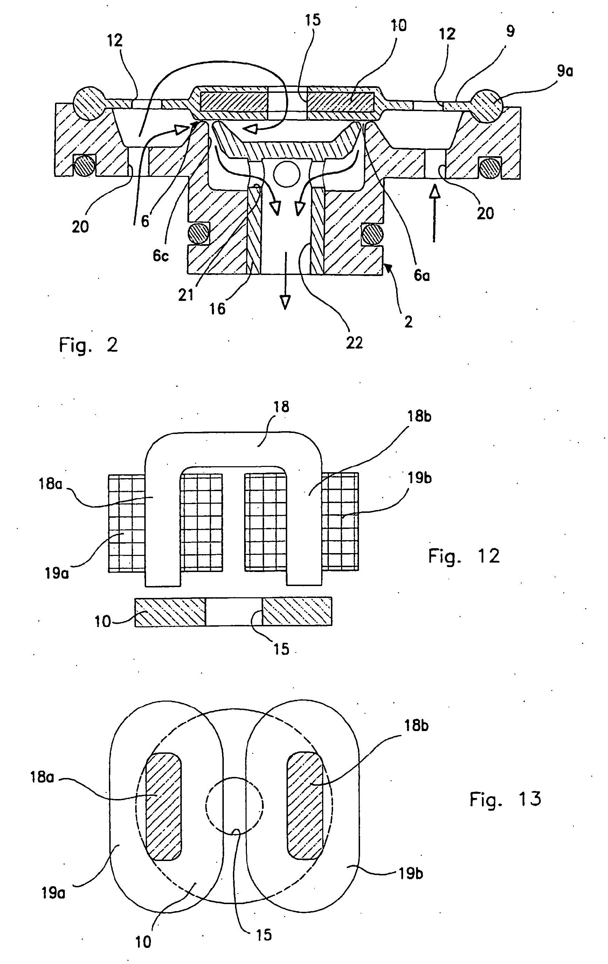

The electromagnet 8 is provided with a fixed armature 18 in a form of a horseshoe, in which each of the opposite arms 18a, 18b is equipped with a respective coil 19a, 19b, jointly constituting the winding of the electromagnet 8. As can be inferred from figure 13, the cross-sections of each of the arms 18a, 18b through which the magnetic flux passes, are chosen to have a size approximately equal to the size of the diametral cross-section of the moving armature 10 (the one which has the through hole 15 in it), which is also a location through which the magnetic flux passes, with the double advantage that the central hole 15, performing its function of placing the chambers 13 and 14 in communication, at the same time lightens the moving armature 10 (which is an advantage for speed) without involving reductions in the magnetic force available.

The reference 15b indicates a coating, preferably of rubber, applied to the surface of the shutter facing the fixed armature of the electromagnet. The functional role of this coating is twofold, to damp the end of travel impact and to prevent contact between the fixed armature and the moving armature of the electromagnet, so as to exclude any substantial magnetic remanence, which might slow down the injector when closing, at the time the current is switched off.

When this example of embodiment is operating, the gaseous fuel is admitted through the duct 16 into the chamber 14, at an area inside the seating 6, and through the hole 15, is transferred in part to the chamber 13 and from this, through the holes 12 in the diaphragm, is conveyed into the chamber 14 close to the outer area of the seating. When the seating 6 is opened, by operation of the electromagnet 8 (with the shutter consequently being attracted), the fuel is admitted into the passage section of the seating 6 running into this from both the lateral edges, as shown in figure 1. Because of the form of the seating as an annular slot, having a radial width substantially negligible with respect to the predominant circumferential development, it is advantageously possible to obtain a very small value for the axial travel of the shutter which determines complete opening of the seating (half of the width of the slot), smaller than what would be necessary, for a given open cross-section, for a seating with a circular hole (a quarter of the diameter of the hole).

Figure 2 illustrates a variant embodiment of the body 2 of the preceding example, in which the inlet and outlet ducts for the fuel from the injector are substantially reversed. In this case the fuel is admitted into the chamber 14 through the holes 20. Part of the fuel flow is directed onto the outer side of the seating, while the remaining part of the fuel flow is conveyed, through the holes 12, the chambers 13 and the central hole 15, onto the inner side of the seating. The annular channel 6c, extending downstream from the seating, is connected by means of radial holes 21 to a blind axial hole 22 made centrally in the duct 16, the latter forming at its opposite axial free end the outlet aperture 5.

It will be noted how the seating, both in the example in figure 1 and in the variant in figure 2, is obtained by joining together two distinct and separate parts concentric with each other and forming, when joined together, the opposite edges 6b of the passage cross-section of the seating 6 and also the respective side walls of the annular channel 6c.

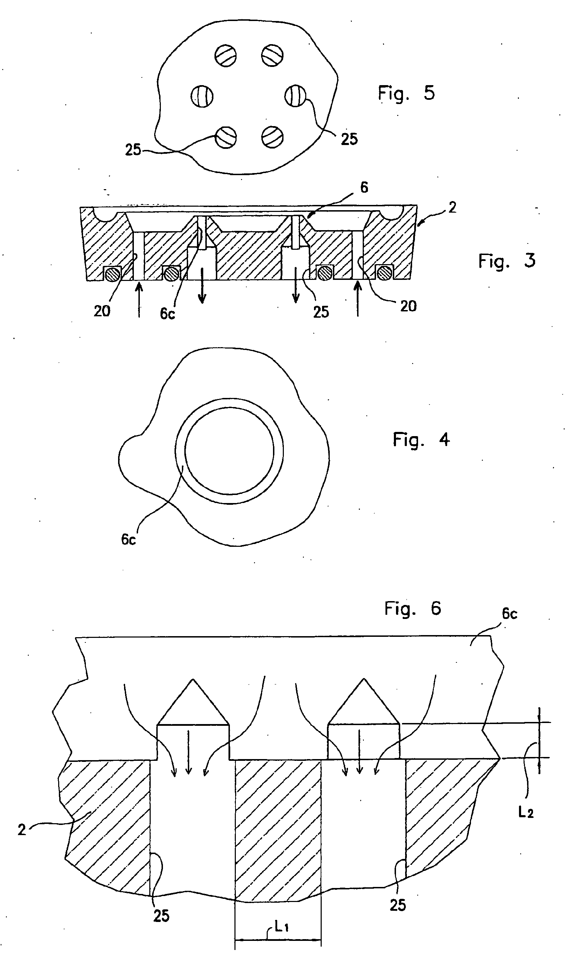

Figure 3 illustrates a further variant of the body 2 according to the invention, the main difference of which compared with the preceding examples lies in the fact that the seating is made entirely in one single piece which forms the valve body 2. More particularly, the annular channel 6c of the seating 6 is extended for a distance downstream of the seating and is continued, with fluid communication, to form a plurality of holes 25 extending axially parallel to the axis X and arranged circumferentially at a predetermined angular distance from each other. As shown in the enlarged detail in figure 6, the holes 25 extend so that they partially intersect the annular channel 6c, preferably for an axial distance, indicated by L2 in the drawing, equal to or greater than at least half of the distance between a pair of consecutive holes 25, indicated by L1 in the drawing. This minimum value for the ratio of the distances allows the flow which passes through the seating into the holes to be discharged without a reduction in the cross-section of the passage for the fuel.

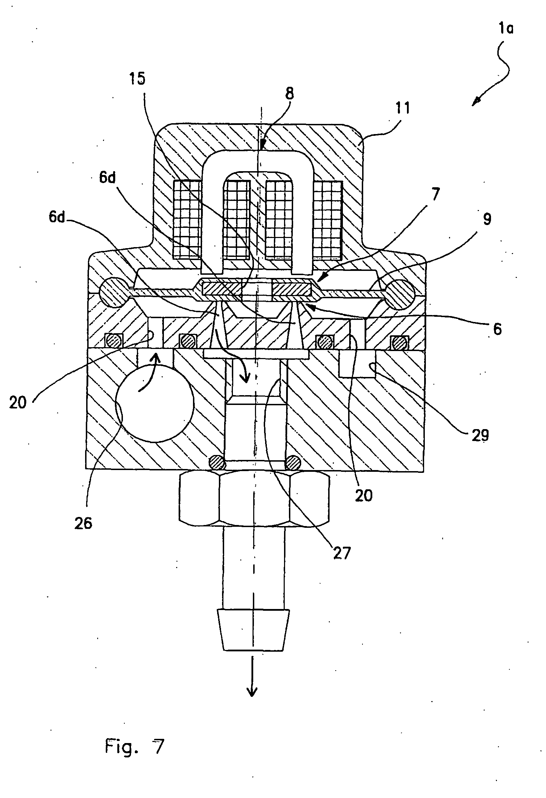

With reference to figure 7, a second example of an injector according to the invention is indicated as a whole as 1a, in which parts similar to those in the previous examples are indicated by the same reference numbers.

The device 1a differs mainly from what has been described previously in the fact that the seating 6 has a fuel passage cross-section in the form of a slot 6d extending in a straight line along a direction of longitudinal development predominant relative to the direction of transverse development.

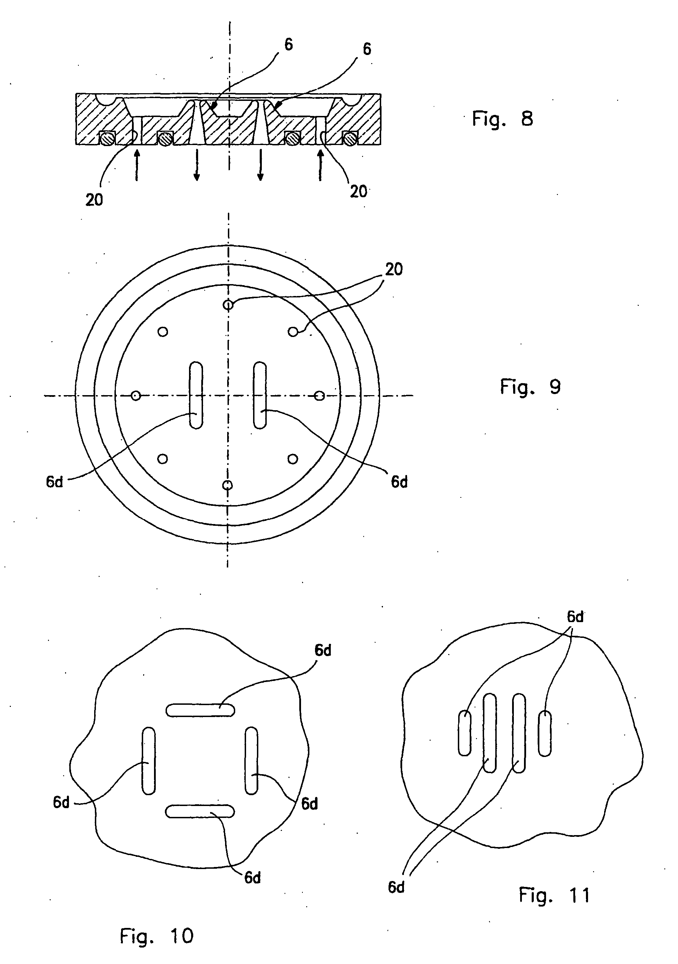

A preferred form of embodiment provides for a seating 6 formed by a pair of separate rectilinear slots 6d, arranged parallel with each other, in positions of mirror-image symmetry relative to the main axis X, as clearly shown in figure 9. The rectilinear slot shape has advantages where it is wished to produce the seating by die casting.

Alternatively, further configurations of the seating 6 are provided, differing in number, relative arrangement and longitudinal size of the rectilinear slots. Figure 10 illustrates, purely by way of example, a configuration with four slots 6d, of equal longitudinal extension, arranged along the sides of a square centred on the axis X. Figure 11 illustrates a further alternative configuration in which two pairs of rectilinear slots 6d are provided, of respective different longitudinal extension, parallel with each other and positioned as mirror images relative to the main axis X.

The seating 6 is made entirely in the body 2 and is preferably obtained by die casting, in particular by die casting of a plastics material.

Figure 7 proposes a variant which combines several injectors into a group with a common feed and separate outlets. A number of injectors 1a equal to the number of cylinders of the heat engine is fitted to the same air connection block 28. Fuel is admitted into each injector 1a via a longitudinal feed hole 26 which connects the inlets of all the injectors in parallel. From the hole 26, the fuel passes into the chamber 14 through an annular channel 29 and a plurality of holes 20. As an example of construction, the injector 1a uses the variant seating in the form of a pair of linear slots 6d.

An advantage of this solution is that both sides of each slot are accessible from the chamber 14, simplifying the passage of the fuel, which no longer has to pass through the diaphragm (which in no longer has holes in it), the chamber 13 and the central hole 15 in the shutter. In this case, the functional role of the central hole 15 is now only that of balancing the pressures on the sides of the diaphragm.

Downstream of the slots 6d, the fuel is conveyed into an axial duct 27, made in the air connection block 28.

It will be noted how even in the case where the seating is chosen with a cross-section in the form of a rectilinear slot of the type described above, the possibility is obtained of advantageously reducing shutter travel, for a given mass of fuel delivered, compared with that provided with a circular hole cross-section of equivalent size.

The invention thus solves the problem set out while achieving numerous advantages compared with known solutions.

A principal advantage resides in the fact of being able to obtain in the injector according to the invention very short travel and low mass of the moving system at the same time, without reducing the fuel passage cross-section and without increasing the force of pressure on the shutter, thus ensuring extremely short response times. This fact allows the injector to meter precisely even very small quantities of fuel, though without losing the capability of also metering large quantities, offering better possibilities for regulating the operation of the engine. A second advantage is that the travel of the moving system is the result of a sum of a limited number of dimensions with moderate values, which consequently involve limited errors, thus making the tolerances acceptable and such as not to require the provision of a system for calibrating the travel.

Yet another advantage is that the electromagnet of the device according to the invention has a higher ratio between the force and mass of the moving armature which allows a further and more substantial reduction in the response time.

Another advantage is that, because a connection, with a central hole, is provided between the chambers formed by the diaphragm, better conditions are obtained in the rapid movement of the moving system, at the same time achieving lightening of the moving armature but without involving losses in the available force.

Yet another advantage is that, because of the provision of rounded edges of the seating, better and more reliable mechanical contact is obtained between the shutter and the valve seating ensuring sealing even when there is dirt on the seating due to impurities present in the fuel delivered.

## Claims

1. An injector of gaseous fuels for internal combustion engines, comprising a valve body (2) into which the fuel is admitted by means of an inlet aperture (4) and from which it is discharged by means of an outlet aperture (5), a seating (6) associated with a respective shutter (7), said shutter comprising a diaphragm (9) and a moving armature (10) of an electromagnet (8) held in a centred positioned by said diaphragm, the electromagnet being capable of causing, in a controlled manner, movement of the shutter (7) relative to the seating (6) from and to a position where this is shut off to allow or shut off the flow of fuel through said seating (6), **characterized in that** said seating (6) has a cross-section for passage of the fuel having the shape of at least one slot (6a, 6d) elongated along a first direction of development predominant relative to a second direction of transverse development of said cross-section and **in that** said cross-section has a perimeter sealing edge (6b) with a cross-section of substantially rounded shape capable of sealing contact against a surface (7a) of the shutter (7) facing it.

2. An injector according to claim 1, in which said seating (6) has a cross-section having the form of at least two separate slots (6d) which extend in a straight line along the predominant direction of development.

3. An injector according to claim 2, in which said slots (6d) are arranged in a position of mirror symmetry relative to a main axis (X) of the shutter (7) of said injector.

4. An injector according to claim 1, in which the cross-section of said seating (6) has the form of an annular slot (6a).

5. An injector according to claim 4, in which said seating (6) comprises an annular channel (6c) developed coaxially with said main axis (X) and extending and being in communication, in the direction of the outlet aperture (5), with a plurality of holes (25) spaced apart at angular intervals and extending axially parallel to said axis (X).

6. An injector according to claim 5, in which said annular channel (6c) is formed by cylindrical walls facing each other and belonging to the same portion of the body (2).

7. An injector according to claim 5 or 6, in which said holes (25) intersect said annular channel (6c) for an axial distance equal to or greater than at least half of the distance between one pair of consecutive holes (25).

8. An injector according to claim 6, in which said annular channel (6c) is formed by cylindrical walls facing each other and belonging to respective separate portions of the body (2) structurally independent of each other.

9. An injector according to one or more of claims 1 to 3, in which said seating (6) is obtained by die casting.

10. An injector according to claim 9, in which said seating (6) is die cast in plastics material.

11. An injector according to one or more of the preceding claims, in which the moving armature (10) and the diaphragm (9) associated with it have a through aperture (15) running through the centre.

12. An injector according to claim 11, in which said aperture (15) is produced as a through hole coaxial with the main axis (X) of the shutter (7).

13. An injector according to one or more of the preceding claims, comprising a spring return means (17) acting on the shutter (7) to apply a load to this for closing the seating (6).

14. An injector according to claim 13, in which said spring return means comprise a sheet metal spring (7) obtained from stamped sheet.

15. An injector according to one or more of the preceding claims, in which at least the surface of the moving armature (10) facing the electromagnet (8) is coated, at least partially, with rubber.

16. An injector according to one or more of the preceding claims, in which the electromagnet (8) comprises a fixed armature (18) in the form of a horseshoe, the opposite arms of which (18a, 18b) are fitted with respective coils (19a, 19b).

## Patentansprüche

1. Eine Vorrichtung zum Einspritzen von gasförmigem Kraftstoff für Brennkraftmaschinen, aufweisend ein Ventilgehäuse (2), in das der Kraftstoff mittels einer Eintrittsöffnung (4) eingeleitet wird und aus dem er mittels einer Austrittsöffnung (5) abgeführt wird, einen Sitz (6), der mit einem entsprechenden Verschluss (7) verbunden ist, wobei der Verschluss eine Membran (9) und einen beweglichen Anker (10) eines Elektromagneten (8), der von der Membran in einer Mittelstellung gehalten wird, aufweist, wobei der Elektromagnet die Fähigkeit besitzt, kontrolliert eine Bewegung des Verschlusses (7) relativ zum Sitz (6) aus und in eine Stellung, in der dieser geschlossen ist, herbeizuführen, um den Strom des Kraftstoffs durch den Sitz (6) zu erlauben oder zu sperren, **dadurch gekennzeichnet, dass** der Sitz (6) einen Querschnitt für den Durchfluss des Kraftstoffs in Form mindestens eines Schlitzes (6a, 6d) besitzt, der entlang einer ersten Entwicklungsrichtung vorwiegend relativ zu einer zweiten Richtung einer Querentwicklung des Querschnitts verlängert ist, und **dadurch**, dass der Querschnitt eine umlaufende Dichtkante (6b) mit einem Querschnitt von im Wesentlichen gerundeter Form mit der Fähigkeit besitzt, einen abdichtenden Kontakt gegen eine Fläche (7a) des ihr zugewandten Verschlusses (7) herzustellen.

2. Vorrichtung zum Einspritzen gemäß Anspruch 1, bei welcher der Sitz (6) einen Querschnitt in Form von mindestens zwei getrennten Schlitzen (6d) besitzt, die in einer geraden Linie entlang der vorwiegenden Entwicklungsrichtung verlaufen.

3. Vorrichtung zum Einspritzen gemäß Anspruch 2, bei welcher die Schlitze (6d) in einer spiegelsymmetrischen Stellung relativ zu einer Hauptachse (X) des Verschlusses (7) der Vorrichtung zum Einspritzen angeordnet sind.

4. Vorrichtung zum Einspritzen gemäß Anspruch 1, bei welcher der Querschnitt des Sitzes (6) die Form eines ringförmigen Schlitzes (6a) hat.

5. Vorrichtung zum Einspritzen gemäß Anspruch 4, bei welcher der Sitz (6) einen ringförmigen Kanal (6c) aufweist, der koaxial mit der Hauptachse (X) entwickelt wird, in Richtung der Austrittsöffnung (5) verläuft und dabei mit einer Vielheit von Löchern (25) kommuniziert, die in Winkelabständen voneinander getrennt sind und achsparallel zur Achse (X) verlaufen.

6. Vorrichtung zum Einspritzen gemäß Anspruch 5, bei welcher der ringförmige Kanal (6c) durch zylindrische Wände gebildet wird, die einander zugewandt sind und zu demselben Teil des Gehäuses (2) gehören.

7. Vorrichtung zum Einspritzen gemäß Anspruch 5 oder 6, bei welcher die Löcher (25) den ringförmigen Kanal (6c) für einen axialen Abstand größer oder gleich mindestens der Hälfte des Abstandes zwischen zwei aufeinanderfolgenden Löchern (25) schneiden.

8. Vorrichtung zum Einspritzen gemäß Anspruch 6, bei welcher der ringförmige Kanal (6c) durch zylindrische Wände gebildet wird, die einander zugewandt sind und zu entsprechenden getrennten Teilen des Gehäuses (2), die konstruktiv voneinander unabhängig sind, gehören.

9. Vorrichtung zum Einspritzen gemäß einem oder mehr der Ansprüche 1 bis 3, bei welcher der Sitz (6) durch Druckguss erhalten wird.

10. Vorrichtung zum Einspritzen gemäß Anspruch 9, bei welcher der Sitz (6) in Kunststoffmaterial druckgegossen ist.

11. Vorrichtung zum Einspritzen gemäß einem oder mehr der vorangegangenen Ansprüche, bei welcher der bewegliche Anker (10) und die mit ihm verbundene Membran (9) eine Durchgangsöffnung (15) besitzen, die durch die Mitte verläuft.

12. Vorrichtung zum Einspritzen gemäß Anspruch 11, bei welcher die Öffnung (15) als ein Durchgangsloch hergestellt ist, das mit der Hauptachse (X) des Verschlusses (7) koaxial ist.

13. Vorrichtung zum Einspritzen gemäß einem oder mehr der vorangegangenen Ansprüche, aufweisend eine federnde Rückstelleinrichtung (17), die auf den Verschluss (7) wirkt, um auf diesen eine Last zum Schließen des Sitzes (6) auszuüben.

14. Vorrichtung zum Einspritzen gemäß Anspruch 13, bei welcher die federnde Rückstelleinrichtung eine Metallblechfeder (7) aufweist, die aus Stanzblech gewonnen wird.

15. Vorrichtung zum Einspritzen gemäß einem oder mehr der vorangegangenen Ansprüche, bei welcher mindestens die Oberfläche des beweglichen Ankers (10), die dem Elektromagneten (8) zugewandt ist, mindestens teilweise mit Gummi überzogen ist.

16. Vorrichtung zum Einspritzen gemäß einem oder mehr der vorangegangenen Ansprüche, bei welcher der Elektromagnet (8) einen festen Anker (18) in Form eines Hufeisens aufweist, dessen gegenüberliegende Arme (18a, 18b) mit entsprechenden Spulen (19a, 19b) versehen sind.

## Revendications

1. Injecteur de carburants gazeux pour moteurs à combustion interne, comprenant un corps de soupape (2) dans lequel le carburant est admis au moyen d'une ouverture d'entrée (4) et à partir duquel il est déchargé au moyen d'une ouverture de sortie (5), un siège (6) associé à un obturateur (7) respectif, ledit obturateur (7) comprenant un diaphragme (9) et une armature mobile (10) d'un électroaimant (8) maintenu dans une position centrée par le diaphragme, l'électroaimant étant capable de provoquer, d'une manière contrôlée, le mouvement de l'obturateur (7) par rapport au siège (6) de et vers une position dans laquelle on assiste à une fermeture pour permettre ou arrêter l'écoulement de carburant par ledit siège (6), **caractérisé en ce que** ledit siège (6) a une section transversale pour le passage du carburant ayant la forme d'au moins une fente (6a, 6d) allongée de long d'une première direction de développement prédominante par rapport à une seconde direction de développement transversal de ladite section transversale et **en ce que** ladite section transversale a un bord d'étanchéité périmétral (6b) avec une section transversale de forme sensiblement arrondie capable de rendre étanche le contact contre une surface (7a) de l'obturateur (7) lui faisant face.

2. Injecteur selon la revendication 1, dans lequel dedit siège (6) a une section transversale ayant la forme d'au moins deux fentes séparées (6d) qui s'étendent en ligne droite le long de la direction prédominante de développement.

3. Injecteur selon la revendication 2, dans lequel lesdites fentes (6d) sont agencées dans une position de symétrie en miroir par rapport à un axe principal (X) de l'obturateur (7) dudit injecteur.

4. Injecteur selon la revendication 1, dans lequel la section transversale dudit siège (6) a la forme d'une fente annulaire (6a).

5. Injecteur selon la revendication 4, dans lequel ledit siège (6) comprend un canal annulaire (6c) développé de manière coaxiale avec ledit axe principal (X) et s'étendant et étant en communication, dans la direction de l'ouverture de sortie (5), avec une pluralité de trous (25) espacés à intervalles angulaires et s'étendant de manière axialement parallèle par rapport audit axe (X).

6. Injecteur selon la revendication 5, dans lequel ledit canal annulaire (6c) est formé par des parois cylindriques se faisant face et appartenant à la même partie du corps (2).

7. Injecteur selon la revendication 5 ou 6, dans lequel lesdits trous (25) coupent ledit canal annulaire (6c) sur une distance axiale égale ou supérieure à au moins la moitié de la distance située entre une paire de trous consécutifs (25).

8. Injecteur selon la revendication 6, dans lequel ledit canal annulaire (6c) est formé par des parois cylindriques se faisant face et appartenant à des parties séparées respectives du corps (2) structurellement indépendantes les unes des autres.

9. Injecteur selon une ou plusieurs des revendications 1 à 3, dans lequel ledit siège (6) est obtenu par moulage sous pression.

10. Injecteur selon la revendication 9, dans lequel ledit siège (6) est moulé sous pression avec une matière plastique.

11. Injecteur selon une ou plusieurs des revendications précédentes, dans lequel l'armature mobile (10) et le diaphragme (9) associé à celle-ci, ont une ouverture de passage (15) s'étendant à travers le centre.

12. Injecteur selon la revendication 11, dans lequel ladite ouverture (15) est produite comme un trou de passage coaxial par rapport à l'axe principal (X) de l'obturateur (7).

13. Injecteur selon une ou plusieurs des revendications précédentes, comprenant des moyens de rappel (17) agissant sur l'obturateur (7) pour appliquer une charge sur celui-ci afin de fermer le siège (6).

14. Injecteur selon la revendication 13, dans lequel lesdits moyens de rappel comprennent un ressort en tôle (7) obtenu à partir d'une tôle emboutie.

15. Injecteur selon une ou plusieurs des revendications précédentes, dans lequel au moins la surface de l'armature mobile (10) faisant face à l'électroaimant (8), est recouverte, au moins partiellement, avec du caoutchouc.

16. Injecteur selon une ou plusieurs des revendications précédentes, dans lequel l'électroaimant (8) comprend une armature fixe (18) se présentant sous forme d'un fer à cheval, dont les bras opposés (18a, 18b) sont montés avec des bobines (19a, 19b) respectives.
